(19) 

**Europäisches Patentamt**
**European Patent Office**
**Office européen des brevets**

(11) **EP 4 671 739 A1**

(12) **EUROPEAN PATENT APPLICATION**
published in accordance with Art. 153(4) EPC

(43) Date of publication:
**31.12.2025 Bulletin 2026/01**

(21) Application number: **23927724.7**

(22) Date of filing: **04.12.2023**

(51) International Patent Classification (IPC):
*G01N 21/84* (2006.01)   *G06N 3/08* (2023.01)
*G06F 18/241* (2023.01)   *G06T 7/11* (2017.01)

(52) Cooperative Patent Classification (CPC):
**G01N 21/84; G06F 18/241; G06N 3/08; G06T 7/11**

(86) International application number:
**PCT/KR2023/019766**

(87) International publication number:
**WO 2024/191004 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.03.2023 US 202363452186 P**

(71) Applicant: **LG Electronics Inc.**
**Yeongdeungpo-gu**
**Seoul 07336 (KR)**

(72) Inventors:
• **KIM, Jaehong**
**Seoul 06772 (KR)**

• **KIM, Hyoeun**
**Seoul 06772 (KR)**
• **JUNG, Yeonjee**
**Seoul 06772 (KR)**
• **JUNG, Hyoungho**
**Seoul 06772 (KR)**
• **JEON, Hyejeong**
**Seoul 06772 (KR)**

(74) Representative: **Schott, Jakob Valentin**
**Wuesthoff & Wuesthoff**
**Patentanwälte und Rechtsanwalt PartG mbB**
**Schweigerstraße 2**
**81541 München (DE)**

(54) **ITEM INSPECTION DEVICE AND METHOD THEREFOR**

(57) An item inspection device is presented. The device may comprise: an image processor for performing image processing on an item image that is input; a text processor for performing text processing on constraints for inspection of an item that is input; and an inspection machine for determining whether the item image that is input satisfies the constraints by using the constraints and a pre-learned data set of reference item images related to the constraints or information related to the pre-learned data set.

FIG. 9

EP 4 671 739 A1

## Description

### TECHNICAL FIELD

The present disclosure relates to an item inspection device and a method therefor, and more particularly, to an item inspection device based on a natural language-based constraint condition and a method therefor.

### BACKGROUND

Due to the aging population, job seekers' reluctance, and employers' burden of costs, robots have emerged to replace jobs that require simple physical labor. When users visit a business place such as a restaurant, the users may often see robots that deliver food to customers. These robots for delivery are expected to be applied to more fields and are still used in places other than restaurants.

Robots are expected to perform tasks previously performed by human workers, but there is a problem in that robots cannot actively recognize items to be delivered to the same degree as a human. If the robot cannot recognize the instructions or commands of a task leader to the same degree as a human, additional procedures for entering the instructions or commands may be required, which may lead to inefficiencies in the use of the robot.

Accordingly, the present disclosure proposes a method by which a robot may efficiently and precisely determine whether a constraint condition of an indicator is satisfied for an item, for example, whether the type of fruit ordered and the number of the corresponding fruits are contained in a bowl when delivering a bowl containing a plurality of fruits to a customer.

### DISCLOSURE

### Technical Problem

The present disclosure proposes an item inspection device and a method therefor.

In more detail, a device and method for performing item inspection by combining a natural language-based constraint condition and an image.

It will be appreciated by persons skilled in the art that the objects that could be achieved with the present disclosure are not limited to what has been particularly described hereinabove and the above and other objects that the present disclosure could achieve will be more clearly understood from the following detailed description.

### Technical Solution

An item inspection device is provided and includes an image processor configured to perform image processing on an input item image, a text processor configured to perform text processing on a constraint condition for inspecting the input item, and an inspector configured to determine whether the input item image satisfies the constraint condition by using the constraint condition and a pre-learned data set of a reference item image related to the constraint condition, or information related to the pre-learned data set.

An item inspection method performed by a device for performing item inspection is provided and includes performing image processing on an input item image and performing text processing on a constraint condition for inspecting the input item, and determining whether the input item image satisfies the constraint condition by using the constraint condition and a pre-learned data set of a reference item image related to the constraint condition or information related to the pre-learned data set.

The solution of the present disclosure is a part of the embodiments of the present disclosure. Various solution means other than the solution means of the above objects may be derived and understood based on the detailed description of the present disclosure to be described below.

### Advantageous Effects

The present disclosure has the following effects.

According to the present disclosure, the accuracy and efficiency of item inspection may be improved.

According to the present disclosure, it is possible to display and output separate items that do not satisfy a constraint condition as a result of item inspection and their separate constraint conditions, thereby improving the efficiency of item inspection or item delivery or transmission.

The effects that are achievable by the present disclosure are not limited to what has been particularly described hereinabove and other advantages not described herein will be more clearly understood by persons skilled in the art from the following description.

## BRIEF DESCRIPTION OF THE DRAWINGS

The accompanying drawings, which are included to provide better understanding of the present disclosure, illustrate embodiments of the present disclosure and together with the description serve to explain the principle of the present disclosure.

FIG. 1 shows an architecture of item inspection according to the related art.
FIG. 2 shows a reference image obtained by photographing an item and a comparison item image.
FIG. 3 shows a structure of item inspection according to the present disclosure.
FIG. 4 shows a structure of item inspection according to the present disclosure.
FIG. 5 shows a structure of item inspection according to the present disclosure.
FIG. 6 illustrates a detailed structure of an item inspection according to the present disclosure.
FIG. 7 shows results of performance improvement according to the present disclosure.
FIG. 8 illustrates a detailed structure of an item inspection according to the present disclosure.
FIG. 9 illustrates a flowchart of an item inspection method according to the present disclosure.

## DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the scope of the present disclosure.

Although terms including ordinal numbers, such as first, second, and the like, may be used to describe various components, the components are not be limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

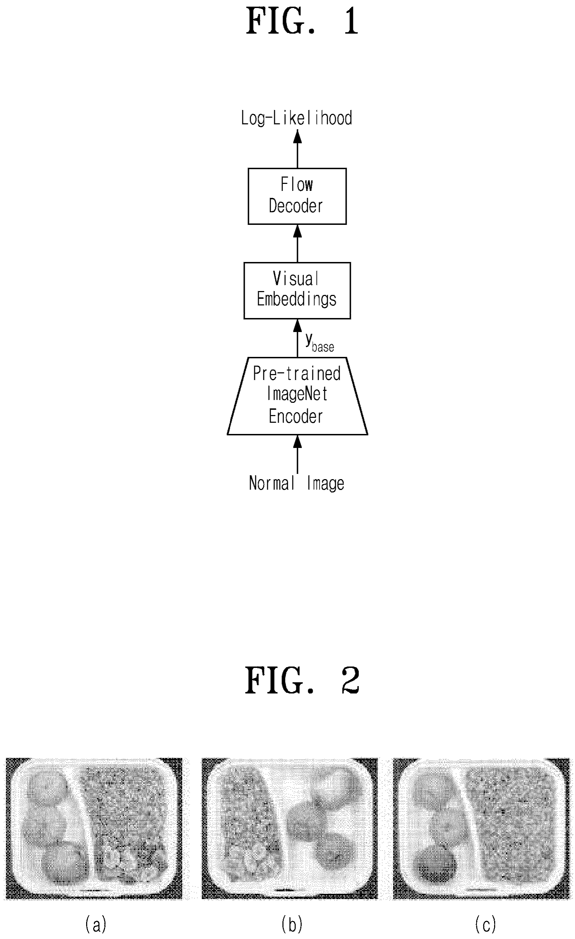

FIG. 1 illustrates an architecture of visual anomaly detection (AD) according to the related art. Whether an image is anomaly may be detected by using a pre-learned image encoder, obtaining visual embedding of an image, and decrypting the visual embedding to obtain a log-likelihood.

With remarkable progress in deep learning, research on visual AD tasks has made significant progress in recent years with practical deployments in several business sectors, for example, detecting various defects such as surface defects, dents, and scratches. However, in reality, visual AD tasks need to go beyond detecting surface defects on an object and detect higher-order anomalies, such as identifying the number of items in a package or identifying the location of assembly components.

Therefore, it is expected that the utility of visual AD in the real world will increase when two types of anomalies need to be processed. One type is a structural anomaly resulting from physical damage to a surface of conventional products, and the other type is a logical anomaly resulting from violations of logical constraint conditions specified by humans.

Referring to FIG. 2, an example of a logical anomaly is illustrated. FIG. 2(a) shows a state in which fruits, cereals, bananas, almonds, and the like are properly placed on a tray, FIG. 2(b) shows a state in which a logical anomaly occurs in which the positions of fruits, cereals, and the like are switched, and FIG. 2(c) shows a state in which a logical anomaly occurs in which some components miss. An image corresponding to FIG. 2(a) may be referred to as an item reference image, and a constraint condition corresponding thereto may be specified as "Breakfast always includes two tangerines and one peach, and these need to be located on the left side of the tray or box. The mixture of cereal, banana chips, and almonds needs to be located on the right side of the tray or box, and from among them, the cereal needs to be located on the upper side and fill half of it, and the mixture of banana chips and almonds needs to be located on the lower side and fill the remaining half." In the following explanation, the explanation will be given based on the same constraint condition. The constraint condition is only an example, and other constraint conditions may be applied.

The two types of anomalies described above often coexist in a single instance and require different approaches to detection. The structural anomaly requires recognizing localized defects, while the logical anomaly needs to understand a logical constraint condition that applies the global visual context of a product. Most previous visual AD researches have focused on identifying localized structural defects in a product image, and thus a new method is required to process both structural and logical anomalies.

Hereinafter, visual AD will be referred to as "item inspection." The item inspection refers to determining whether any constraint condition related to an item imposed by a user (administrator) is found in an item image. That is, the item inspection mainly addressed in the present disclosure relates to logical anomaly detection, but does not exclude structural anomaly detection.

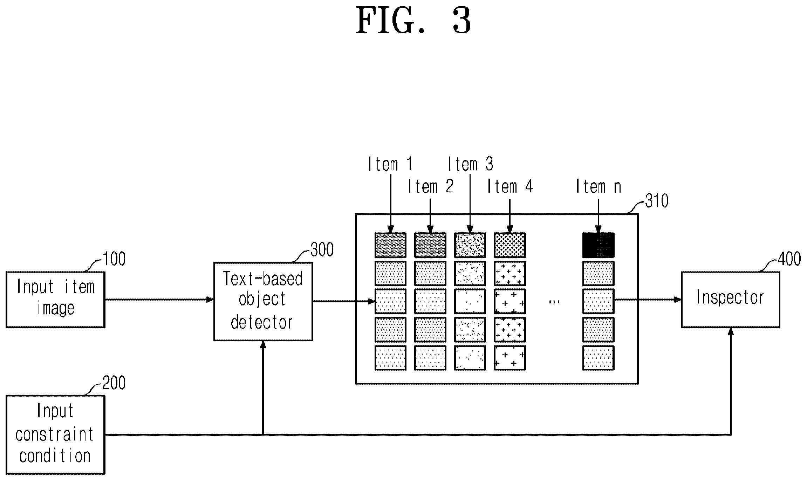

FIG. 3 illustrates a first method of item inspection according to the present disclosure.

A device 100 for inputting an item image receives an item image and transfers the item image to a text-based object detector 300. A device 200 for inputting a constraint condition receives a constraint condition including natural language speech or text information and transfers the constraint condition to the text-based object detector 300 and an inspector 400. The text-based object detector 300 performs object detection based on the input constraint condition, and as a result recognizes separate items in the item image.

The text-based object detector 300 may match the recognized separate item with text information related to the recognized separate item within the constraint condition and convert the result into another form of information. The converted information may be stored in a semantic space 310. For example, the text-based object detector 300 may vectorize the result of matching separate item information and text information and store the result in a vector space 310.

The inspector 400 determines whether the item image satisfies the input constraint condition. If the item image satisfies the input constraint condition, the inspector 400 may output the result through an audio-visual output device such as a display or a speaker. If the item image does not satisfy the input constraint condition, the inspector 400 may output the result through an audio-visual output device such as a display or a speaker. If the item image does not satisfy the input constraint condition, the inspector 400 may output a separate item that does not satisfy the constraint condition and the basis and reason for the same through the audio-visual output device.

According thereto, it is possible to make explicit determination about separate items within the constraint condition and to check the basis and reasons for such determination.

In the item inspection method shown in FIG. 3, the method may be pre-learned before performing item inspection. That is, a plurality of item reference images may be input into the item image input device 100, and a single constraint condition corresponding to the image may be input to teach the "correct answer" to the inspector 400. In a pre-learning stage, the inspector 400 may average the result of matching the plurality of item reference images and the text of the constraint condition and set the averaged information or value as reference information. Thereafter, when the item image and the constraint condition are input for actual item inspection, the inspector 400 may compare the converted matching information obtained as a result of a text-based object detection operation by using the corresponding item image and constraint condition with the reference information and determine whether the item inspection has failed based on whether a difference between the two pieces of information is outside a preset range. That is, if the difference between the two pieces of information is outside a preset range, the item inspection is determined to be a failure, and if the difference between the two pieces of information is within a preset range, the item inspection is determined to be a success.

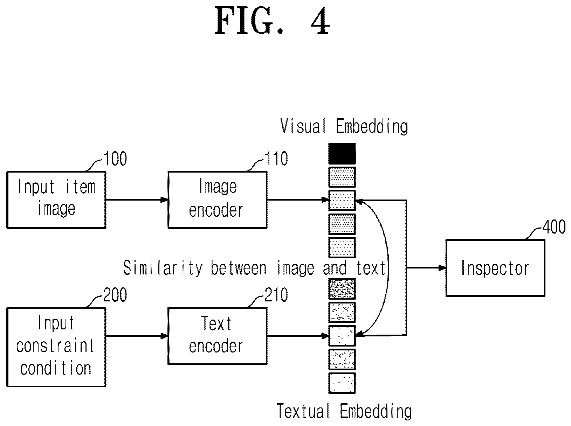

FIG. 4 illustrates a second method of item inspection according to the present disclosure.

The second method adopts contrastive language-Image pre-training (CLIP), and simply put, CLIP is trained on combinations of N*N (image, text) pairs, which are made from N (image, text) pairs. CLIP needs to match N real (image, text) pairs while distinguishing $N^2-N$ incorrect pairs. To this end, CLIP is basically structured as a dual encoder including an image encoder and a text encoder.

The device 100 for inputting an item image receives an item image and transfers the item image to an image encoder 110. The image encoder 110 performs visual embedding from the item image or obtains a result of visual embedding. The result of embedding may be expressed as an array or vector of numbers of a certain size, and in this specification, performing embedding or obtaining the result thereof may be expressed as 'obtaining embedding.'

The device 200 for inputting a constraint condition receives a constraint condition including natural language speech or text information and transfers the constraint condition to a text encoder 210. The text encoder 210 obtains text embedding from the constraint condition.

The obtained visual embedding and the obtained text embedding may be aligned with each other based on their similarity. This alignment is expressed as semantically aligned. Although not shown, alignment of visual embedding and text embedding may be performed by a controller controlling an image encoder and/or a text encoder, or by the inspector 400. To this end, the controller or the inspector 400 may obtain the similarity between the visual embedding and the text embedding.

The inspector 400 may compare the previously obtained similarity with a reference threshold to determine whether the item image satisfies the constraint condition. That is, if the obtained similarity exceeds the reference threshold, the item image satisfies the constraint condition, otherwise, the item image does not satisfy the constraint condition.

If the item image satisfies the constraint condition, the inspector 400 may output the result through an audio-visual output device such as a display or a speaker. If the item image does not satisfy the constraint condition, the inspector 400 may output the result through an audio-visual output device such as a display or a speaker. If the item image does not satisfy the input constraint condition, the inspector 400 may output a separate item that does not satisfy the constraint condition and the basis and reason for the same through the audio-visual output device.

According thereto, it is possible to make explicit determination about separate items within the constraint condition and to check the basis and reasons for such determination.

In the item inspection method shown in FIG. 4, the method may be pre-learned before performing item inspection. That is, a plurality of item reference images may be input into the item image input device 100, and a single constraint condition corresponding to the image may be input to teach the "correct answer" to the inspector 400. In the pre-learning stage, the inspector may obtain visual embedding and text embedding by using each of a plurality of item reference images and a constraint condition, calculate the similarity between the visual embedding and the text embedding, and learn that the calculated similarity exceeds a reference threshold. Through this process, the reference threshold may be set. Then, when the item image and the constraint condition are input for actual item inspection, the inspector 400 may obtain visual embedding and text embedding by using the corresponding item image and the constraint condition, calculate the similarity between the visual embedding and the text embedding, and compare the calculated similarity with a reference threshold to determine whether the item inspection is successful or not.

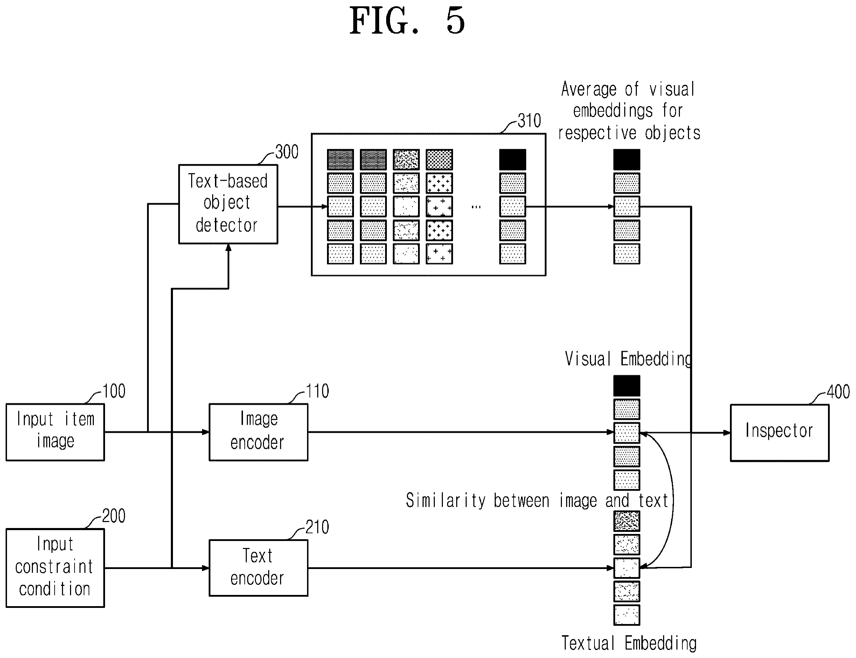

FIG. 5 illustrates a third method of item inspection according to the present disclosure. The third method is a combination of the first and second methods described above.

The device 100 for inputting an item image receives an item image and transfers the item image to the text-based object detector 300. The device 200 for inputting a constraint condition receives a constraint condition including natural language speech or text information and transfers the constraint condition to the text-based object detector 300. The text-based object detector 300 performs object detection based on the input constraint condition, and as a result recognizes separate items in the item image.

The text-based object detector 300 may match the recognized separate item with text information related to the recognized separate item within the constraint condition and convert the result into another form of information. The converted information may be stored in a semantic space 310. The text-based object detector 300 or the inspector 400 may obtain visual embeddings for respective objects from transformation information stored in the semantic space. The obtained visual embedding may be averaged.

The device 100 for inputting an item image transfers the input item image to the image encoder 110. The image encoder 110 obtains visual embedding from the item image. The device 200 for inputting a constraint condition transfers the input constraint condition including natural language speech or text information to the text encoder 210. The text encoder 210 obtains text embedding from the constraint condition.

The obtained visual embeddings for respective objects may be averaged, and the obtained visual embedding and the obtained text embedding may be aligned with each other according to their similarity. This alignment is expressed as semantically aligned. Although not shown, the alignment may be performed by a controller controlling an image encoder and/or a text encoder, or by the inspector 400. To this end, the controller or the inspector 400 may obtain the average of visual embeddings for respective objects and the similarity between the visual embedding and the text embedding.

The inspector 400 may compare the previously obtained similarity with a reference threshold to determine whether the item image satisfies the constraint condition. That is, if the obtained similarity exceeds the reference threshold, the item image satisfies the constraint condition, otherwise, the item image does not satisfy the constraint condition.

If the item image satisfies the constraint condition, the inspector 400 may output the result through an audio-visual output device such as a display or a speaker. If the item image does not satisfy the constraint condition, the inspector 400 may output the result through an audio-visual output device such as a display or a speaker. If the item image does not satisfy the input constraint condition, the inspector 400 may output a separate item that does not satisfy the constraint condition and the basis and reason for the same through the audio-visual output device.

According thereto, it is possible to make explicit determination about separate items within the constraint condition and to check the basis and reasons for such determination.

In the item inspection method shown in FIG. 5, the method may be pre-learned before performing item inspection. That is, a plurality of item reference images may be input into the item image input device 100, and a single constraint condition corresponding to the image may be input to teach the "correct answer" to the inspector 400. In the pre-learning stage, the inspector may obtain the average of visual embeddings for respective objects, the visual embedding and the text embedding by using each of a plurality of item reference images and a constraint condition, calculate the average of the visual embeddings for respective objects and similarity between the visual embedding and the text embedding, and learn that the calculated similarity exceeds a reference threshold. Through this process, the reference threshold may be set. Then, when the item image and the constraint condition are input for actual item inspection, the inspector 400 may obtain the average of the visual embeddings for respective objects and the visual embedding and the text embedding by using the corresponding item image and the constraint condition, calculate the similarity between the visual embedding and the text embedding, and compare the calculated similarity with a reference threshold to determine whether the item inspection is successful or not.

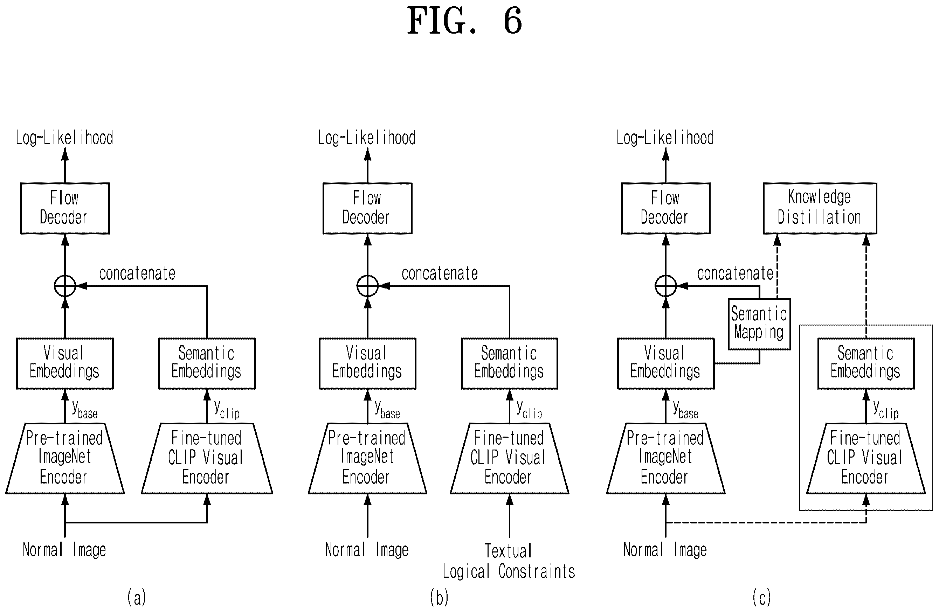

FIG. 6 illustrates a detailed structure of an item inspection according to the present disclosure.

The present disclosure proposes visual anomaly detection (AD) capable of inspecting both structural anomaly and logical anomaly of the item described above. Therefore, the textual description of a logical constraint condition is utilized as prior knowledge for visual AD by inspiration from a scenario of performing visual inspection. To this end, textual descriptions of the logical constraint condition need to be integrated, and multimodal representation models need to be utilized in visual AD models.

To this end, contrastive language-image pre-training (CLIP) based on dual visual and text encoders trained to align image and text pairs, as illustrated in FIG. 6. A CLIP flow that goes beyond the visual spatial representation of image data and utilizes representations in a semantic space based on the logical constraint condition for visual AD is proposed.

FIG 6 illustrates three variations of a CLIP flow, where FIG. 6(a) corresponds to CLIP flow-visual, FIG. 6(b) corresponds to CLIP flow-Text, and FIG 6(c) corresponds to CLIP flow-distill. All three variants utilize fine-tuned CLIP to leverage more sophisticated cross-modal representations, and use pre-trained ImageNet models for image encoding.

For semantic encoding, CLIP flow-visual and CLIP flow-text use CLIP visual and text encoders respectively, and use ImageNet and CLIP encoders in both training and detection processes. For CLIP flow-distill, the knowledge distill task is performed via an additional mapping module that links visual encoding of the image encoder to semantic encoding of the CLIP visual encoder. Unlike CLIP flow-visual and CLIP flow-text, the CLIP encoder is removed and only the visual encoder is used during the inference process.

- Advance preparation

1. Normalization flow for AD

The normalization flow is a deep generative model that explicitly models a target distribution p*(y) as a bijective transformation $g^{-1}:Y \to Z$ in a latent space Z of the Gaussian base distribution pz(z). When $z=g^{-1}(y)$ by using a variable change formula, a probability density function of a model for input $y \in Y$ is given as follows.

[Equation 1]

$$p_Y(y) = p_Z(g^{-1}(y)) \left| \det \frac{\partial g^{-1}(y)}{\partial y} \right|.$$

For visual AD, y is commonly selected to be an image feature from a pre-trained feature extractor. The normalization flow $g^{-1}$ is performed as a mapping function from a high-dimensional feature space to a latent space.

Then, the parameters of $g^{-1}$ are optimized by a minimization problem with the following negative log-likelihood loss.

[Equation 2]

$$\mathcal{L}(\theta) = \frac{\|z\|_2^2}{2} - \log |\det \mathbf{J}|$$

Here, $J = \nabla_y g^{-1}(y,\theta)$ is the Jacobian for a flow parameter $\theta$. Then, the likelihood of image features is calculated from the estimated parameterized density $\hat{p}_Y(y, \theta)$. During the detection process, the model assigns low probabilities to ideal inputs and recognizes that the ideal inputs are unlikely to be sampled from the normal training set.

2. Multimodal contrastive learning

Recent research on vision language representation models has provided a new paradigm for vision models by proposing multimodal contrastive learning to align image and text descriptions in a vision-language joint embedding space. In particular, CLIP adopts a simple dual-encoder architecture that includes one video encoder $I:x{\to}R^d$ and one text encoder $T:t{\to}R^d$. Joint vision-language embedding of CLIP, which is pre-trained on a data set of 400 million image-text pairs, may properly link rich object concepts across different modalities, enabling visual embedding to be used as semantic text embedding. CLIP allows text-based constraint conditions to be directly used as prior information, which motivates the use of multimodal representations for visual anomaly detection (AD) by using logical constraint conditions.

- CLIP flow

1. Fine tune CLIP using text logic constraint condition

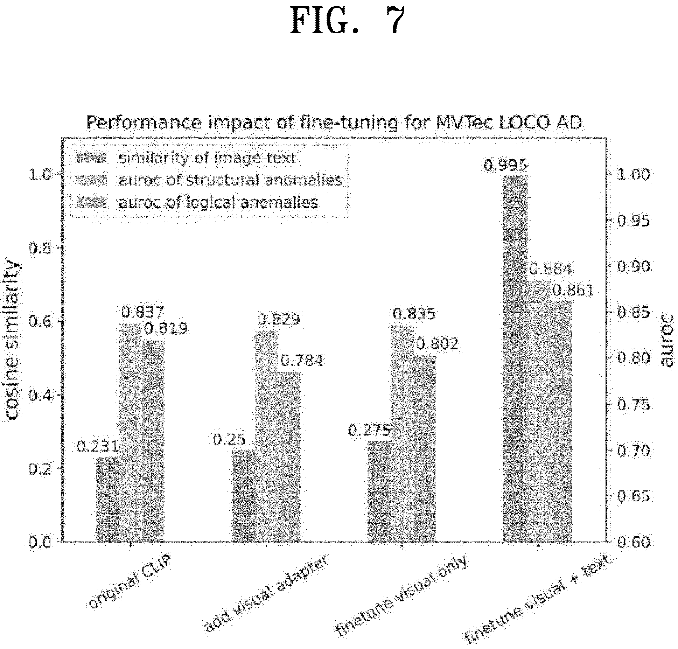

To improve the similarity between visual and text embeddings and text logical constraint conditions for non-intimate industrial product images, some parameters of CLIP need to be fine-tuned using their target data set. All layers except a projection layer for optimization using the last block of CLIP visual and text encoders and MTVTec LOCO AD are frozen. There is a single definition of a logical constraint condition in each category, and thus category-based visual-language contrastive learning proposed by UniCL is used, and a sentence of the logical constraint condition for each category is provided as generic sample captions. FIG. 7 shows a correlation between the similarity and AD performance of normal image-text constraint conditions according to fine tuning. It is seen that fine tuning performance is affected not only by logical anomaly but also by structural anomaly.

2. CLIP flow - visual and text

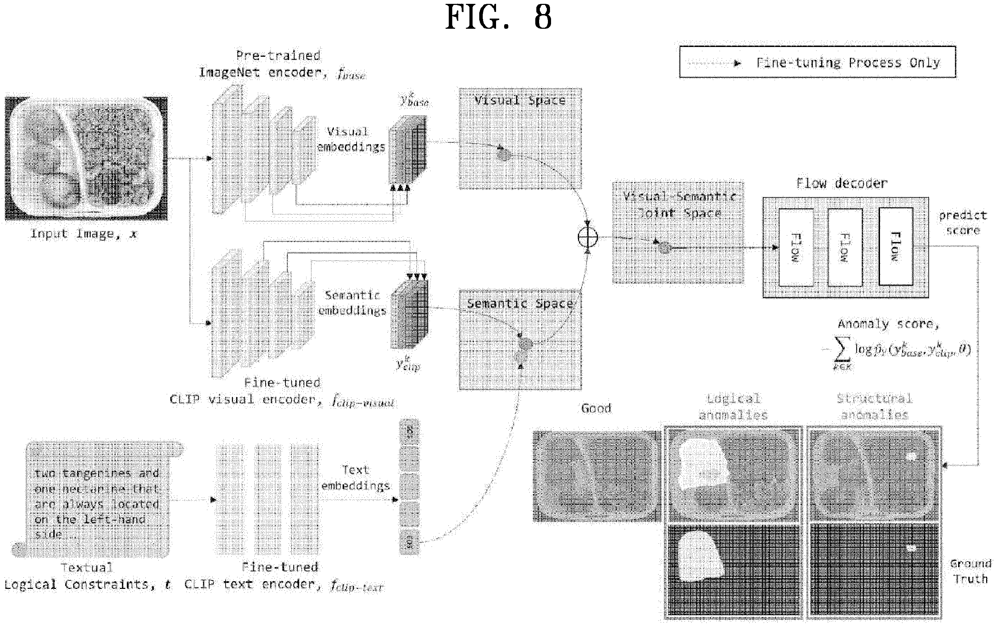

The overall framework of CLIP flow-visual is illustrated in FIG. 8. To use a logical constraint condition as input, the output features of the CLIP visual encoder are used as conditional semantic encodings of the normalized flow AD model. The existing normalization flow model is extended and joint representation features of multi-scale features of both fine-tuned CLIP and a pre-trained ImageNet network are provided to a reversible transformation module. An image and text embedding are semantically aligned, and thus a CLIP flow-text model that directly injects a text into the AD model is established using the CLIP text encoder instead of the CLIP visual encoder.

Referring to FIG. 8, the multi-scale visual and semantic embeddings generated from the pre-trained ImageNet encoder and the fine-tuned CLIP visual encoder are transferred to the flow decoder model by forming a joint visual-semantic representation. After the learning process, good, structural and logical anomalies are detected in a single model for each category through a log-likelihood anomaly score. A dotted arrow from the fine-tuned CLIP text encoder to a semantic space indicate that embeddings of normal image-text constraint condition pairs are located in adjacent spaces within the semantic space through a fine-tuning process.

3. CLIP flow-distill

An object of CLIP flow-distill is to improve a feedforward process of two encoders, CLIP and ImageNet, during the inference process. To obtain this, a lightweight version of CLIP flow-visual is proposed, along with a semantic mapping module that uses knowledge distill technologies.

As described above, it is expected that improved inspection results may be obtained in the fields of logical and structural anomalies by using a multimodal model for visual anomaly detection (AD).

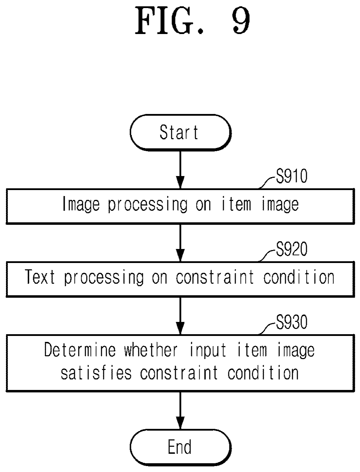

FIG. 9 illustrates a flowchart of an item inspection method according to the present disclosure. The method of FIG. 9 may be performed by the item inspection device or a processor or controller of the item inspection device, and a name of the item inspection device does not limit the scope of the present disclosure. Hereinafter, the item inspection device will be described as performing the method of FIG. 9.

The item inspection device may perform image processing on an input item image (S910).

The item inspection device may perform text processing on a constraint condition for input item inspection (S920).

The order of image processing (S910) for the input item image and text processing (S920) for a constraint condition for input item inspection does not limit the scope of the present disclosure. That is, the order of S910 and S920 may be different from in FIG. 9, and thus the text processing (S920) and the image processing (S910) may be performed simultaneously, or the text processing (S920) may be performed before the image processing (S910).

The item inspection device may determine whether the input item image satisfies the input constraint condition by using a pre-learned data set of the input constraint condition and a reference item image related to the input constraint condition (S930). Alternatively, the item inspection device may determine whether the input item image satisfies the input constraint condition by using information related to the pre-learned data set described above (S930).

The pre-trained data set may include data trained on constraint condition-based object detection input for a plurality of reference item images.

Information related to the pre-learned data set may include information about a threshold for similarity between an image obtained through the pre-learned data set and a constraint condition or text information of the constraint condition. In more detail, information related to the pre-trained data set may include information about a threshold for similarity between visual embedding obtained from an input item image and text embedding obtained from an input constraint condition. Alternatively, information related to the pre-learned data set may include threshold information for similarity among an average vector of visual embeddings for respective objects obtained as a result of constraint condition-based object detection for the input item image, the visual embedding obtained from the input item image and the text embedding obtained from the constraint condition.

Alternatively, information related to the pre-trained data set may include a threshold for a log-likelihood ideal score for visual-semantic representation data obtained by combining the visual embedding obtained from the input item image and the semantic embedding obtained from the input item image.

The item inspection device may detect an object from the input item image and match text information of the constraint condition related to the detected object.

The item inspection device may determine that the input item image satisfies the constraint condition when the similarity between the visual embedding obtained from the input item image and the text embedding obtained from the constraint condition exceeds a preset threshold.

The item inspection device may determine that the input item image satisfies the constraint condition when the average vector of visual embeddings for respective objects obtained as a result of object detection based on the input constraint condition for the input item image, and the similarity between the visual embedding obtained from the input item image and the text embedding obtained from the constraint condition exceed preset thresholds.

The item inspection device may determine that the input item image does not satisfy the constraint condition when a log-likelihood anomaly score for visual-semantic representation data obtained by combining a visual embedding obtained from the input item image and a semantic embedding obtained from the input item image exceeds a preset threshold.

The item inspection device may output information about an unsatisfied constraint condition from among the constraint conditions to an audio-visual output device such as a display or a speaker when the input item image does not satisfy an input constraint condition.

Based on the example illustrated in FIG. 2, satisfaction or dissatisfaction of constraint conditions is indicated as in the following table, and in the case of an input item image that does not satisfy the constraint condition, the item inspection device may output an unsatisfied separate constraint condition to the audio-visual output device.

[Table 1]

| Input item image | FIG. 2(a) | FIG. 2(b) | FIG. 2(c) |
|---|---|---|---|
| Constraint condition | Satisfaction/unsatisfaction of separate constraint condition | | |
| 1 peach | Satisfaction | Satisfaction | Dissatisfaction |
| 2 tangerines | Satisfaction | Satisfaction | Dissatisfaction |
| Locations of peach and tangerine | Satisfaction | Dissatisfaction | Satisfaction |
| Cereal | Satisfaction | Satisfaction | Satisfaction |
| Banana chip | Satisfaction | Satisfaction | Dissatisfaction |
| Locations of cereal and banana chip | Satisfaction | Dissatisfaction | Dissatisfaction |
| Ratio of cereal and banana chip | Satisfaction | Satisfaction | Dissatisfaction |

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

**Claims**

1. An item inspection device comprising:

   an image processor configured to perform image processing on an input item image;
   a text processor configured to perform text processing on a constraint condition for inspecting the input item; and
   an inspector configured to determine whether the input item image satisfies the constraint condition by using the constraint condition and a pre-learned data set of a reference item image related to the constraint condition, or information related to the pre-learned data set.

2. The item inspection device of claim 1, further comprising a text-based object detector configured to detect an object from the input item image and match the detected object with related text information of the constraint condition.

3. The item inspection device of claim 1, wherein the pre-trained data set includes data trained on object detection based on the constraint condition for a plurality of reference item images.

4. The item inspection device of claim 1, wherein the pre-trained data set includes data semantically aligned based on a similarity between i) visual embedding obtained from a plurality of reference item images for the plurality of reference item images and ii) text embedding obtained from the constraint condition.

5. The item inspection device of claim 1, wherein the inspector is configured to determine that the input item image satisfies the constraint condition based on a similarity between the visual embedding obtained from the input item image and the text embedding obtained from the constraint condition exceeding a preset threshold.

6. The item inspection device of claim 1, wherein the pre-trained data set includes data semantically aligned based on a similarity among i) an average vector of visual embeddings for respective objects obtained as a result of object detection based on the constraint condition for a plurality of reference item images, ii) visual embedding obtained from the plurality of reference item images and iii) text embedding obtained from the constraint condition.

7. The item inspection device of claim 1, wherein the inspector is configured to determine that the input item image satisfies the constraint condition based on a similarity among an average vector of visual embeddings for respective objects obtained as a result of object detection based on the input constraint condition for the input item image, visual embedding obtained from the input item image and text embedding obtained from the constraint condition exceeding a preset threshold.

8. The item inspection device of claim 1, wherein the pre-trained data set includes visual-semantic representation data obtained by combining visual embedding obtained from a plurality of reference item images and semantic embedding obtained from the plurality of reference item images, and
   the semantic embedding is adjusted based on text embedding obtained from the constraint condition.

9. The item inspection device of claim 1, wherein the inspector is configured to determine that the input item image does not satisfy the constraint condition based on a log-likelihood anomaly score for visual-semantic representation data obtained by combining visual embedding obtained from the input item image and semantic embedding obtained from the input item image exceeding a preset threshold.

10. The item inspection device of claim 1, further comprising an output device configured to output information about an unsatisfied constraint condition from among the constraint conditions based on that the constraint condition is not satisfied.

11. An item inspection method performed by a device for performing item inspection, the item inspection method comprising:

    performing image processing on an input item image and performing text processing on a constraint condition for inspecting the input item; and

determining whether the input item image satisfies the constraint condition by using the constraint condition and a pre-learned data set of a reference item image related to the constraint condition or information related to the pre-learned data set.

12. The item inspection method of claim 11, further comprising detecting an object from the input item image and matching the detected object with text information of the constraint condition related to the detected object.

13. The item inspection method of claim 11, wherein the pre-trained data set includes data trained on object detection based on the constraint condition for a plurality of reference item images.

14. The item inspection method of claim 11, wherein the pre-trained data set includes data semantically aligned based on a similarity between i) visual embedding obtained from a plurality of reference item images for the plurality of reference item images and ii) text embedding obtained from the constraint condition.

15. The item inspection method of claim 11, further comprising determining that the input item image satisfies the constraint condition based on a similarity between the visual embedding obtained from the input item image and the text embedding obtained from the constraint condition exceeding a preset threshold.

16. The item inspection method of claim 11, wherein the pre-trained data set includes data semantically aligned based on a similarity among i) an average vector of visual embeddings for respective objects obtained as a result of object detection based on the constraint condition for a plurality of reference item images, ii) visual embedding obtained from the plurality of reference item images and iii) text embedding obtained from the constraint condition.

17. The item inspection method of claim 11, further comprising determining that the input item image satisfies the constraint condition based on a similarity among an average vector of visual embeddings for respective objects obtained as a result of object detection based on the input constraint condition for the input item image, visual embedding obtained from the input item image and text embedding obtained from the constraint condition exceeding a preset threshold.

18. The item inspection method of claim 11, wherein the pre-trained data set includes visual-semantic representation data obtained by combining visual embedding obtained from a plurality of reference item images and semantic embedding obtained from the plurality of reference item images, and

the semantic embedding is adjusted based on text embedding obtained from the constraint condition.

19. The item inspection method of claim 11, further comprising determining that the input item image does not satisfy the constraint condition based on a log-likelihood anomaly score for visual-semantic representation data obtained by combining visual embedding obtained from the input item image and semantic embedding obtained from the input item image exceeding a preset threshold.

20. The item inspection method of claim 11, further comprising outputting information about an unsatisfied constraint condition from among the constraint conditions based on that the constraint condition is not satisfied.

21. A nonvolatile computer-readable medium storing a computer program configured to perform the method of any one of claims 11 to 20.

# FIG. 1

Log-Likelihood

Flow
Decoder

Visual
Embeddings

$y_{base}$

Pre-trained
ImageNet
Encoder

Normal Image

# FIG. 2

(a)                    (b)                    (c)

# FIG. 3

# FIG. 4

Visual Embedding

Input item image ~100 → Image encoder ~110 →

Similarity between image and text

Input constraint condition ~200 → Text encoder ~210 →

→ Inspector ~400

Textual Embedding

# FIG. 5

Text-based object detector — 300

Average of visual embeddings for respective objects — 310

Input item image — 100

Image encoder — 110

Input constraint condition — 200

Text encoder — 210

Visual Embedding

Textual Embedding

Similarity between image and text

Inspector — 400

EP 4 671 739 A1

# FIG. 6

(a)

(b)

(c)

EP 4 671 739 A1

# FIG. 7

Performance impact of fine-tuning for MVTec LOCO AD

# FIG. 8

Pre-trained ImageNet encoder, $f_{base}$

Visual embeddings

$y^k_{base}$

Visual Space

Input Image, $x$

Fine-tuning Process Only

Visual-Semantic Joint Space

Flow decoder

Flow  Flow  Flow

predict score

Semantic embeddings

Semantic Space

$y^k_{clip}$

Fine-tuned CLIP visual encoder, $f_{clip-visual}$

Anomaly score,

$$-\sum_{k \in K} \log \hat{p}_v(y^k_{base}, y^k_{clip}, \theta)$$

two tangerines and one nectarine that are always located on the left-hand side ...

Text embeddings

Good    Logical anomalies    Structural anomalies

Textual Logical Constraints, $t$    Fine-tuned CLIP text encoder, $f_{clip-text}$

Ground Truth

EP 4 671 739 A1

# FIG. 9

```
            ┌─────────┐
            │  Start  │
            └────┬────┘
                 │           ╭S910
    ┌────────────▼───────────────┐
    │ Image processing on item image │
    └────────────┬───────────────┘
                 │           ╭S920
    ┌────────────▼───────────────┐
    │ Text processing on constraint condition │
    └────────────┬───────────────┘
                 │           ╭S930
    ┌────────────▼───────────────┐
    │ Determine whether input item image │
    │   satisfies constraint condition    │
    └────────────┬───────────────┘
                 │
            ┌────▼────┐
            │   End   │
            └─────────┘
```

## INTERNATIONAL SEARCH REPORT

| International application No. |
| --- |
| **PCT/KR2023/019766** |

| A. | CLASSIFICATION OF SUBJECT MATTER |
| --- | --- |
| | **G01N 21/84**(2006.01)i; **G06N 3/08**(2006.01)i; **G06F 18/241**(2023.01)i; **G06T 7/11**(2017.01)i |

According to International Patent Classification (IPC) or to both national classification and IPC

| B. | FIELDS SEARCHED |
| --- | --- |

Minimum documentation searched (classification system followed by classification symbols)

G01N 21/84(2006.01); G06F 16/532(2019.01); G06F 16/58(2019.01); G06F 40/20(2020.01); G06K 9/62(2006.01); G06N 20/00(2019.01); G06T 11/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 영상 인코더(visual encoder), 텍스트 인코더(text encoder), 시각적 임베딩(visual embedding), 텍스트 임베딩(text embedding), 레퍼런스 이미지(reference image), 제약 조건(constraint), 벡터(vector), 의미적 (semantic)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023-0073843 A1 (NAVER CORPORATION) 09 March 2023 (2023-03-09) See paragraphs [0105]-[0171], claim 1 and figures 1-4. | 1-3,5,7,11-13,15,17,21 |
| A | | 4,6,8-10,14,16,18-20 |
| A | US 2022-0036127 A1 (ADOBE INC.) 03 February 2022 (2022-02-03) See paragraphs [0052]-[0101], claim 1 and figures 2-11. | 1-21 |
| A | KR 10-2020-0092491 A (INDUSTRY-ACADEMIC COOPERATION FOUNDATION, YONSEI UNIVERSITY) 04 August 2020 (2020-08-04) See paragraphs [0028]-[0095], claim 1 and figures 1-8. | 1-21 |
| A | US 2020-0380403 A1 (ADOBE INC.) 03 December 2020 (2020-12-03) See paragraphs [0061]-[0081], claim 1 and figures 3-7. | 1-21 |

| ✓ Further documents are listed in the continuation of Box C. | ✓ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **14 March 2024** | **14 March 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2023/019766** |

### C.    DOCUMENTS CONSIDERED TO BE RELEVANT

| Category* | Citation of document, with indication, where appropriate, of the relevant passages | Relevant to claim No. |
| --- | --- | --- |
| A | GOODWIN et al. Semantically grounded object matching for robust robotic scene rearrangement. International Conference on Robotics and Automation (ICRA). IEEE. 27 May 2022, pp. 11138-11144. See pages 11138-11143 and figures 1-5. | 1-21 |

Form PCT/ISA/210 (second sheet) (July 2022)

# EP 4 671 739 A1

## INTERNATIONAL SEARCH REPORT
### Information on patent family members

| International application No. |
|---|
| **PCT/KR2023/019766** |

| Patent document cited in search report | | | Publication date (day/month/year) | Patent family member(s) | | | Publication date (day/month/year) |
|---|---|---|---|---|---|---|---|
| US | 2023-0073843 | A1 | 09 March 2023 | EP | 4134840 | A1 | 15 February 2023 |
| US | 2022-0036127 | A1 | 03 February 2022 | US | 11574142 | B2 | 07 February 2023 |
| KR | 10-2020-0092491 | A | 04 August 2020 | KR | 10-2192015 | B1 | 16 December 2020 |
| US | 2020-0380403 | A1 | 03 December 2020 | AU | 2020-202021 | A1 | 17 December 2020 |
| | | | | AU | 2020-202021 | B2 | 11 November 2021 |
| | | | | CN | 112015940 | A | 01 December 2020 |
| | | | | DE | 102020001790 | A1 | 03 December 2020 |
| | | | | GB | 2584780 | A | 16 December 2020 |
| | | | | US | 11144784 | B2 | 12 October 2021 |
| | | | | US | 11604822 | B2 | 14 March 2023 |
| | | | | US | 11605019 | B2 | 14 March 2023 |
| | | | | US | 2020-0380027 | A1 | 03 December 2020 |
| | | | | US | 2020-0380298 | A1 | 03 December 2020 |
| | | | | US | 2021-0365727 | A1 | 25 November 2021 |
| | | | | US | 2023-0185844 | A1 | 15 June 2023 |

Form PCT/ISA/210 (patent family annex) (July 2022)